## Europäisches Patentamt
## European Patent Office
## Office européen des brevets

(19)

(11) Veröffentlichungsnummer: **0 095 999**
**B1**

(12) # EUROPÄISCHE PATENTSCHRIFT

(45) Veröffentlichungstag der Patentschrift:
26.11.86

(21) Anmeldenummer: 83730046.6

(22) Anmeldetag: 04.05.83

(51) Int. Cl.⁴: **B 01 D 46/32,** B 01 D 53/08,
B 01 D 53/26

(54) **Verfahren und Vorrichtung zum kontinuierlichen Austausch von in einem chemischen und/oder physikalischen Vorgang, wie z.B. einem Filter-, einem Adsorptions- oder Trockenvorgang, verbrauchten regenerierbaren Kontaktmitteln, wie Filtermaterialien, Trockenmitteln, Adsorbermaterialien oder**

(30) Priorität: 13.05.82 DE 3218286
15.04.83 DE 3313943

(43) Veröffentlichungstag der Anmeldung:
07.12.83 Patentblatt 83/49

(45) Bekanntmachung des Hinweises auf die Patenterteilung:
26.11.86 Patentblatt 86/48

(84) Benannte Vertragsstaaten:
CH FR GB LI

(56) Entgegenhaltungen:
DE-A-3 003 124
DE-C-883 598
DE-C-945 025
FR-A-2 232 349
GB-A-593 156
GB-A-1 176 363
GB-A-2 070 973
US-A-2 544 214

(73) Patentinhaber: Stiehl, Hans H., Dr., Rhumeweg 30,
D-1000 Berlin 37 (DE)

(72) Erfinder: Stiehl, Hans H., Dr., Rhumeweg 30,
D-1000 Berlin 37 (DE)

(74) Vertreter: Butenschön, Antje, Dr., Patentanwälte
PFENNING, MEINIG & PARTNER
Kurfürstendamm 170, D-1000 Berlin 15 (DE)

EP 0 095 999 B1

LIBER, STOCKHOLM 1986

## Beschreibung

Die Erfindung betrifft ein Verfahren zum kontinuierlichen Austausch von in einem chemischen und/oder physikalischen Abscheidevorgang verbrauchten regenerierbaren Kontaktmitteln nach dem Oberbegriff des Anspruchs 1 und eine Vorrichtung zur Durchführung des Verfahrens.

Es ist bekannt, zur Stoffrückgewinnung oder zur Reinigung von Luft oder Gasen oder anderen strömenden Medien Filter, z.B. Wanderbettfilter, zu benutzen, die mit rieselfähigen Feststoffbetten aus regenerierbaren Kontaktmitteln, wie Filtermaterialien, Trockenmitteln, Adsorbermaterialien oder Katalysatoren versehen sind. Diese Feststoffbetten werden von unten her mit dem zu reinigenden Gas beströmt, wobei die Kontaktmittel sich von unten nach oben abnehmend mit den zu trennenden Stoffen anreichern.

Die verbrauchten und gesättigten Kontaktmittel werden über Ablaßvorrichtungen schichtweise nach unten in einen Behälter abgelassen, während von oben her unverbrauchte Kontaktmittel nachgefüllt werden. Die gesättigten Kontaktmittel werden anschließend in einem Regenerator reaktiviert. Dazu ist es bisher notwendig, das Filter außer Betrieb zu setzen, um dann die Reaktivierung durchzuführen. Um einen kontinuierlichen Filterprozeß der zu reinigenden Gase oder der strömenden Medien aufrechterhalten zu können, ist es bisher üblich, ein zweites Filter vorzusehen, wobei das eine im Filterbetrieb arbeitet, während die gesättigten Kontaktmittel des zweiten Filters einem Regenerationsverfahren unterworfen werden. Dieses Verfahren ist wegen der notwendigen zwei Filter sehr kostenaufwendig und in der Handhabung umständlich.

Die DE-C-945 025 betrifft ein kontinuierliches Verfahren zur Abscheidung von Stoffen aus gasförmigen Medien mit Hilfe von Adsorptionsmitteln und zur Ausscheidung der Stoffe. Dabei weist der Adsorber einen trichterförmigen unteren Teil auf, der das Adsorptionsmittel nach unten hin abgrenzt. Durch den Adsorber 2 ist eine Fördervorrichtung 4 geführt, die mehrere durch einen Antrieb angetriebene, hintereinandergeschaltete Förderelemente aufweist, wobei die Förderelemente zwischen sich Kammern bilden. In dem Bereich des Endes des trichterförmigen Teiles des Adsorbers ist der Förderkanal der Fördervorrichtung mit Schlitzen versehen, durch die das beladene Adsorptionsmittel aufgrund der trichterförmigen Ausbildung auf die Förderelemente fällt.

Parallel zu dem Adsorber ist innerhalb der Fördervorrichtung eine Desorptionsstrecke vorgesehen, die sich über eine Vielzahl von Förderelementen erstreckt.

Die DE-C-883 598 beschreibt ein Verfahren und eine Vorrichtung zur Bewegung von Adsorptionsmitteln oder Katalysatoren in kontinuierlicher Weise, wobei die Durchgangsgeschwindigkeit des Adsorptionsmittels durch die Adsorptionsvorrichtung durch einen Schieber gesteuert werden kann, der auch zur vollständigen Absperrung des Adsorptionsmittelstromes dienen kann. Mit dieser bekannten Vorrichtung ist ein schichtenweiser Austrag der Adsorptionsmittel möglich.

Die FR-A-2 232 349 beschreibt ein Verfahren zum Reinigen eines mit Staub beladenen Gases mittels eines Feststoffbettes, durch das das staubbeladene Gas hindurchströmt. Das in einem trichterförmigen Behälter aufgenommene Kontaktmittel wird am Ende des Trichters abgezogen und einem Regenerator zugeführt, in dem die Kontaktmittel mittels eines Gebläses von den Staubpartikeln gereinigt werden.

Bei den Ausführungsformen des Standes der Technik weisen die Feststoffbetten und/oder das zu regenerierende Kontaktmittel große Schichtdicken auf, so daß die Druckdifferenz beim Transport des Trägergases und/oder bei der Regeneration sehr groß ist, so daß der Energieaufwand hoch ist.

Der vorliegenden Erfindung liegt die Aufgabe zugrunde, ein Verfahren zum kontinuierlichen Austausch von in einem chemischen und/oder physikalischen Abscheidevorgang verbrauchten regenerierbaren Kontaktmitteln gemäß dem Oberbegriff des Anspruchs 1 und eine Vorrichtung zur Durchführung des Verfahrens zu schaffen, mit denen die für die Abscheidung und Regenerierung notwendige Energie verringert werden kann.

Diese Aufgabe wird erfindungsgemäß durch die kennzeichnenden Merkmale des Anspruchs 1 und des Anspruchs 8 in Verbindung mit den Merkmalen des Oberbegriffs gelöst.

Durch die Kombination des Abführens des gesättigten Kontaktmittels in kleinen gleichmäßigen Mengen schichtweise in Intervallen als über den gesamten Querschnitt des Feststoffbettes gleichmäßige planparallele Schichten und des Zuführens der jeweilig abgelassenen Menge an Kontaktmittel direkt dem dieser Menge angepaßten und während der Regeneration gegenüber dem Feststoffbett abgesperrten Regenerator kann der Energieverbrauch optimiert werden. Bei dem erfindungsgemäßen Verfahren und der erfindungsgemäßen Vorrichtung werden jeweils nur durchsättigte bzw. total verbrauchte Schichten mit großem Flächenquerschnitt entnommen. Durch diese Maßnahme läßt sich besonders dann, wenn aus verfahrenstechnischen und umwelttechnischen Gründen besonders hohe Abscheidewirkungsgrade erzielt werden sollen, die Bettdicke und damit die Druckdifferenz, verursacht durch Strömungswiderstand des Trägergases im Granulatbett, wesentlich verringern. Gleichzeitig wird das Bauvolumen verringert. Auch der Regenerator arbeitet mit

einem Granulatfestbett, wobei er entsprechend den in einem Intervall abgelassenen Kontaktmittelmengen in seiner Größe ausgebildet ist. Bei heißen Kontaktmitteln braucht kein auf die Desorptionstemperatur erwärmtes Spülgas für die Regeneration eingesetzt werden, da der Regenerator abgeschlossen ist und über die Kontaktwärme nur die Energiemenge eingebracht zu werden braucht, die zur Desorption notwendig ist. Da nur durchsättigte oder total verbrauchte Teilmengen regeneriert werden, wird die aufgrund der Wärmekapazität des Granulats eingesetzte Wärmemenge minimiert.

Durch die in den abhängigen Ansprüchen angegebenen Maßnahmen sind vorteilhafte weiterbildungen und Verbesserungen möglich. Besonders vorteilhaft ist, daß das Kontaktmittel entsprechend dem Magazinprinzip in Scheiben, Patronen, Platten oder Rugeln zusammengefaßt sein kann, die übereinander oder hintereinander angeordnet werden, wobei bei Sättigung des Kontaktmittels eine Scheibe, Platte, Patrone oder Rugel ausgewechselt wird. Ein weiterer Vorteil bei dieser Art von Feststoffbetten ist, daß sich die Kontaktmittelschichten ständig in Ruhe befinden, da jeweils die gesamte Scheibe oder Platte ausgewechselt wird. Dadurch ist der Abrieb des Kontaktmittels sehr gering.

Ein Ausführungsbeispiel der Vorrichtung, bei dem das Verfahren angewandt wird, ist in der Zeichnung dargestellt und das Verfahren wird anhand dieser Vorrichtung in der Beschreibung näher erläutert. Es zeigen:

Fig. 1 eine Filteranlage entsprechend dem Stand der Technik,

Fig. 2 eine Filteranlage mit Regenerator, bei dem das erfindungsgemäße Verfahren angewandt wird,

Fig. 3 ein Diagramm der Beladungsmenge des Feststoffbettes in Abhängigkeit von der Einwirkungsdauer bis zum Umschalten bei einem Verfahren nach dem Stand der Technik;

Fig. 4 das Diagramm der Beladungsmenge als Funktion der Einwirkungsdauer bis zum Umschalten bei dem erfindungsgemäßen Verfahren;

Fig. 5 Schnitt durch ein weiteres Ausführungsbeispiel der erfindungsgemäßen Vorrichtung mit Regenerator und Destillationsstufe;

Fig. 6 eine Aufsicht auf das Ausführungsbeispiel nach Fig. 5;

Fig. 7 Schnitt durch ein weiteres Ausführungsbeispiel der erfindungsgemäßen Vorrichtung mit Regenerator und Destillationsstufe;

Fig. 8 Schnitt durch ein weiteres Ausführungsbeispiel der erfindungsgemäßen Vorrichtung mit Regenerator und Destillationsstufe; und

Fig. 9 einen Teilschnitt durch die Austreibungskammer entsprechend dem Ausführungsbeispiel nach Fig. 7.

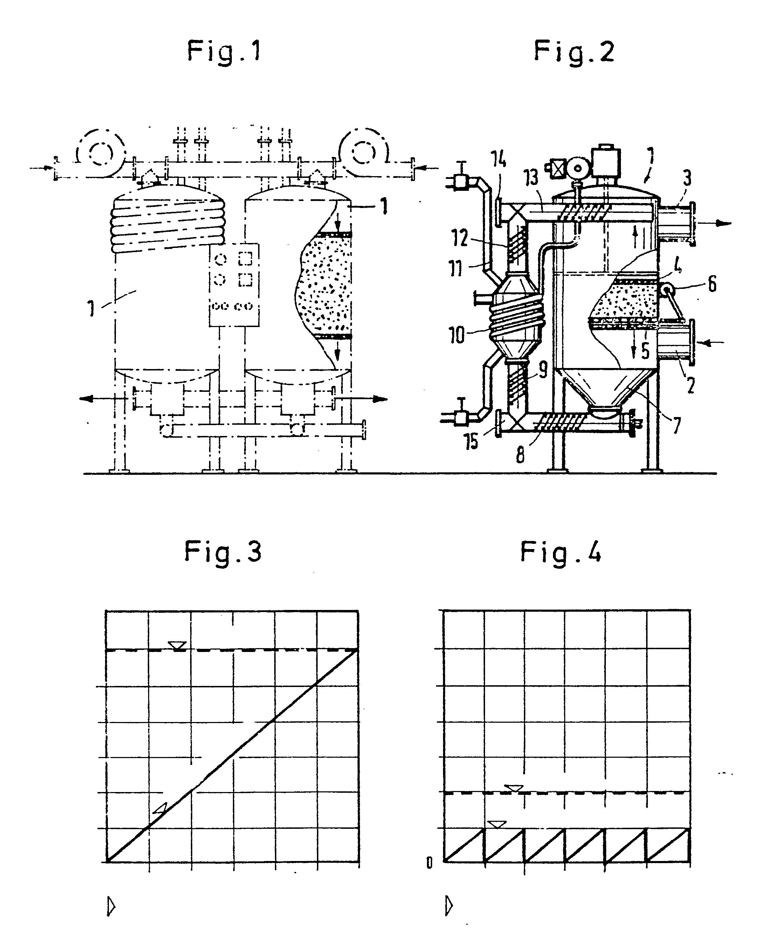

Die in Fig. 1 gezeigte Filteranlage entsprechend dem Stand der Technik weist zwei gleiche Behälter 1 auf, in denen jeweils eine Kontaktmittelschicht 4 vorgesehen ist. Diese Anlage arbeitet in der Weise, daß der Filtervorgang in dem einen Filter stattfindet, während das in dem parallel dazu geschalteten zweitig Filter mit dem gleichen Füllinhalt das gesättigte Kontaktmittel regeneriert wird. Die Umschalttaktzeit von einem Filter auf dem anderen ist aus der Fig. 3 zu entnehmen. Das z.B. gesförmige Medium, aus dem gewisse Stoffe abzutrennen sind, wirkt solange auf die Kontaktmittelschicht ein, bis ein bestimmter Bättigungsgrad erreicht ist. Entsprechend der Fig. 3 weist die Beladungsmenge über die Dauer des Filtervorgangs einen linearen Sättigungsverlauf auf. Nachdem das gesamte Kontakt mittel der Schicht gesättigt ist, üblicherweise geschieht das in einer Zeit von sechs bis sieben Stunden, wird auf das andere Filter mit frischem Kontaktmittel umgeschaltet und der Filtervorgang beginnt dann von vorn und nimmt den in Fig. 3 gezeigten Verlauf.

In Fig. 2 ist wie Filteranlage, bei der das erfindungsgemäße Verfahren angewandt wird, dargestellt, wobei das Filter als Wanderbettfilter ausgebildet ist. Das mit den zu trennenden Stoffen angereicherte gas- oder dampfförmige Medium wird dem Behälter 1 des Wanderbettfilters über das Zuführungsrohr 2 zugeleitet, während das von den Stoffen befreite gaß oder dampfförmige Medium über das Abflußrohr 3 wieder herausgeleitet wird. Innerhalb des Wanderbettfilters ist eine Kontaktmittelschicht 4 angeordnet, die von unten her mit dem die zu trennenden Stoffe enthaltenden gas- oder dampfförmigen Medium angestromt wird. Über eine Ablaßvorrichtung 5, die nicht näher dargestellt oder beschrieben werden soll, wird das gesättigte Kontaktmittel mit Hilfe eines Antriebs, zum Beispiel eines Drehantriebs, der die Öffnungs- und Schließzeiten der Ablaßvorrichtung 5 steuert in gleichmäßigen Schichten planparallel in den Behältertrichter 7 abgelassen. Unterhalb des Behältertrichters 7 ist ein Winkel-Schnecken-Förderer 8 angeordnet, der das jeweils abgelassene gesättigte, granulatförmige Kontaktmittel über einen senkrechten Schneckenförderstrang 9 einem Regenerator zuführt. Der Regenerator 10 weist Ablaßrohre 11 für das Kondensat auf. Im Regenerator 10 werden · die in dem Kontaktmittel gespeicherten Stoffe gelöst. Das in der Weise gereinigte Kontakumittel wird über einen weiteren senkrecht stehenden Schneckenförderstrang 12 nach oben durch eine Förderschnecke 13 wieder in das Wanderbettfilter befördert. Das Kontaktmittel kann dabei direkt der Kontaktmittelschicht zugeführt werden, es kann aber auch ein Kontaktmittelvorrat vorgesehen sein, der entsprechend dem abgelassenen gesättigten Kontaktmittel die Kontaktmittelschicht 4 in gleichmäßigen Schichten mit dem regenerierten Kontaktmittel wieder auffüllt. An dem unteren

und oberen Winkelschneckenförderer 8, 13 sind Stutzen 14, 15 angebracht, die zur Ausschleusung von nicht mehr brauchbarem Kontaktmittel vorgesehen sind, zum Beispiel von Kontaktmittel aus mehrmaligen Umläufen im Falle hoher Konzentration der zu trennenden Stoffe, die sich nicht mehr restlos aus dem Kontaktmittel beseitigen lassen.

In Fig. 4 ist die Beladungamenge des Filters in Abhängigkeit von der Einwirkungsdauer bis zum Umschalten bzw. zum Ablassen des jeweiligen gesättigten Kontaktmittels für das erfindungsgemäße Verfahren dargestellt. Daraus ist zu entnehmen, daß das Kontaktmittel jeweils bis zu Hälfte der Schichtdicke gesättigt wird und dann abgelassen wird. Frisches Kontaktmittel wird gleichzeitig von oben her wieder aufgefüllt, so daß die Schichtdicke erhalten bleibt. Das Ablassen erfolgt in kurzen Abständen, zum Beispiel in der Größenordnung von einer Stunde dadurch ergibt sich der in Fig. 4 gezeigte Sättigungsverlauf. Der Regenerator wird nach dem jeweiligen Ablassen mit der entsprechenden kleinen Menge des gesättigten Kontaktmittels bestrückt und regeneriert unabhängig von dem im Wanderbettfilter weiterlaufenden Filtervorgang das Kontaktmittel. Da der Regenerator 10 ständig arbeitet und jeweils nur kleine Mengen zu regenerierten hat, kann er sehr viel kleiner als in der Anordnung nach Fig. 1 ausgeführt sein. Durch den kontinuerlichen Betrieb parallel zum Filtervorgang verarbeitet er zum Beispiel über vierundzwanzig Stunden gesehen eine der Fig. 1 entsprechende Menge.

Zur Erläuterung wird im folgenden des Verfahren entsprechend Fig. 1 mit dem erfindungsgemäßen Verfahren anhand von einigen Zahlen verglichen, wobei als Kontaktmittel Kohle verwendet wird. Bei dem Verfahren entsprechend Fig, 1 werden zwei gleichgroße Kohle- und Behältervolumen verlangt, was in der folgenden Rechnung einem Volumen von 100 % entsprechen soll. Bei dem erfindungsgemäßen Verfahren setzt sich die Kontaktmittelschicht aus einer Arbeitsschicht und einer Sicherheitsschicht gleicher Schichtdicke zusammen, wobei jede Schicht nur 1/7 des Kohlevolumens eines Behälters nach Fig. 1 beträgt. Dies entspricht ungefähr 14 % nach der oben angegebenen Definition. Jeweils 1/4 der Menge der Arbeitsschicht befindet sich im Regenerator 10 ($\triangle$ 1,8 %) und 1/4 der Menge der Arbeitsschicht befindet sich im Förderweg ($\triangle$ 1,8 %). Das benötigte Kohlevolumen reduziert sich daher auf ungefähr 18 % des bisher üblichen Volumens, trotz einer Sicherheitsschicht mit der Schichtdicke der eigentlichen Arbeitsschicht, der Regenerator-Druckbehälter reduziert sich in seiner Größe auf ungefähr 3,6 % eines bisherigen Behälters, da etwa 1/4 der Menge der Arbeitsschicht ständig regeneriert wird.

Auch die Energie zum Regenerieren verringert sich, was beispielhaft im Folgenden gezeigt wird. Bei dem Verfahren entsprechend dem Stand der Technik erfolgt bei einem Vierundzwanzig-Stundenbetrieb 3,5 mal eine Regenerierung, und zwar laut Literaturangaben für die Dauer von jeweils einer Stunde. Nimmt man für das Regenerierungsvolumen von 100 % hundert Energieeinheiten an, so ergeben sich für das Verfahren nach dem Stand des Technik 350 Einheiten pro Tag, was wiederum 100 % entsprechen soll. Bei dem erfindungsgemäßen Verfahren werden 3,6 % des Regenerierungsvolumens ($\triangle$ ungefähr 3,6 Energieeinheiten) kontinuierlich für 24 Stunden benötigt. Es ergibt sich ein Energiebedarf von ungefähr 87 Einheiten pro Tag, was bei der obigen Definition 25 % entspricht. Die Regenerierungsenergie reduziert sich daher um 75 % auf 25 % der bei dem Verfahren nach dem Stand der Technik benötigten Energie. Dabei sind noch nicht die Aufheizenergie des großen Behälters und die größeren Wärmeverluste eines großen Behälters berücksichtigt. Im erfindungsgemäßen Verfahren treten die Anheizund Abkühlenergieverluste nicht mehr auf, da der Regenerator ständig im Betrieb ist. Vorteilhafterweise kann der kontinuerliche Regenerierungszyklus in Abhängigkeit von der anfallenden Schadstoffkonzentration gesteuert werden.

Zum Aufrechterhalten der Druckdifferenz der Kontaktmittelschicht ist ein Ventilator notwendig, Auch hier kann Energie, nämlich Ventilatorenergie, eingespant werden, da die Schichtdicke bei dem erfindungsgemäßen Verfahren nur ungefähr 2/7 der Schichtdicke nach dem bekannten Verfahren beträgt so daß nur noch 30 % der Energie für den Ventilator zur Aufrechterhaltuna der Druckdifferenz benötigt werden:

Bei der in Fig. 2 dergestellten Filteranlage handelt es sich um ein Wanderbettfilter mit einem rieselfähigen Feststoffbett, bei dem das Kontaktmittel bei dem Austausch sich in einem Massenfluß befindet. Das erfindungsgemäße Verfahren kann aber auch bei einer anderen Filteranlage verwendet werden. Bei dieser Anlage wird die Kontaktmittelschicht des Filters aus auswechselbaren Kontaktmittel-Scheiben oder -Platten gebildet, die in mehreren Lagen übereinander geschichtet oder hintereinander angeordnet sind. Wenn das Kontaktmittel einer Scheibe oder Platte gesättigt ist, wird diese entfernt und dem Regenerator zugeführt. Nach dem Entfernen des zu trennenden Stoffes aus der Kontaktmittel-Scheibe oder -Platte wird diese vom Regenerator wieder in das Filter zurückbefördert, und zwar jeweils oben auf bzw. auf der Reinluftseite liegend. Sobald die unterste bzw. erste Kontaktmittel-Scheibe oder -Platte wieder gesättigt ist, erfolgt der gleiche Vorgang des Wechselns von neuem.

Die Abmaße und Dicken der Scheiben oder Platten richten sich nach der Konzentration, nach der Einwirkzeitdauer des gas- oder dampfförmigen Mediums auf das Kontaktmittel und nach der Zeit, die zum Regenerieren notwendig ist. Bei dieser Art der Filterung und

des Austauschs des Kontaktmittels wird der Abrieb des Kontaktmittels verringert. Das Kontaktmittel bleibt in Ruhe und ohne Massenfluß, weil nur kompakte Scheiben oder Platten ohne Rüttelung ausgetauscht werden.

Bei dem eben beschriebenen Ausführungsbeispiel ist das Kontaktmittel in Platten oder Scheiben zusammengefaßt, Es ist aber auch denkbar, daß Kugeln oder Patronen vorgesehen sind, die das Kontaktmittel enthalten. Der Filter- und Austauschvorgang erfolgt dann entsprechend den obigen Ausführungen.

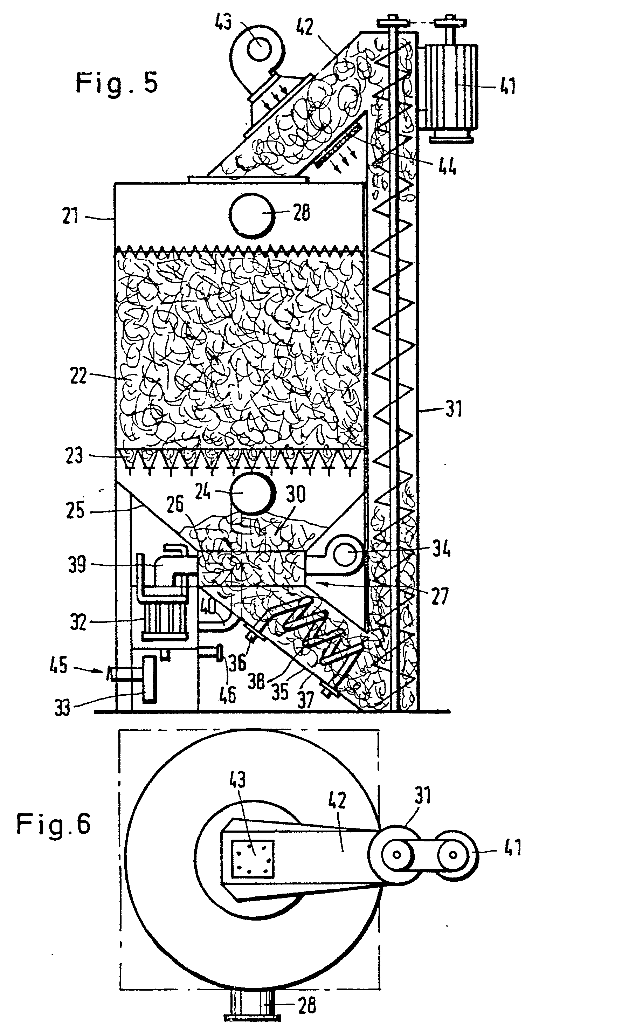

In den Figuren 5 bis 9 sind weitere Ausführungsbeispiele für die erfindungsgemäße Vorrichtung, die als Feststoffbett einen Wanderbettadsorber aufweist, beschrieben. In Fig. 5 ist in einem Behälter 21 die Kontaktmittelschicht 22 aufgenommen, wobei das Kontaktmittel Zinkoxydverbindungen, Kaseneisenerz, Tonerde, Aluminiumoxyd usw. oder verschiedene Aktivkohlen in Granulatform sein kann. Das Kontakemittel wird, wie schon weiter oben beschrieben, über die Ablaßvorrichtung 23 in dünnsten Schichten in den Behältertrichter 25 abgelassen. Das mit den zu trennenden und rückzugewinnenden Stoffen angereicherte gas- oder dampfförmige Medium, z.B. Luft, wird dem Behälter 21 über das Zuführungsrohr 24 zugeleitet und strömt nach der Filterung aus dem Abflußrohr 28 heraus. Unter dem Behältertrichter 25 ist ein Regenerator 27 angeordnet, der eine sich direkt an den Auslaß des Behältertrichters 25 anschließende Austreibkammer 26 aufweist. Die Austreibkammer 26 ist mit einer Absperreinrichtung 29 versehen, die die Kammer in der Austreibphase abschließt, so daß kein Kontaktmittel in die Kammer und aus der Kammer heraus gelangen kann. Die Absperreinrichtung 29 kann als Schieber, Drehsperren, Iris-Blenden oder Absperrbalge ausgebildet sein. Die Austreibkammer 26 ist mit einem Heißluftventilator 34 mit Erhitzerpatrone verbunden, der Luft mit einer Temperatur von 85° bis 180° C durch die Austreibkammer 26 hindurchschickt. An die Austreibkammer schließt sich nach unten hin, über die Absperreinrichtung 29 absperrbar, eine Rutsche 35 an, über die das Kontaktmittel zur Fördereinrichtung 31 gelangt. Innerhalb der Rutsche ist eine Kühlschlange 38 mit einem Kühlmittelzulauf 36 und -ablauf 37 vorgesehen, wobei das Kühlmittel Wasser sein kann.

Die von dem Heißluftventilator gelieferte Heißluft wird nach dem Durchleiten durch die Austreibkammer 26 über einen Kanal 39 der Kondensationsstufe 32 zugeführt, an den sich eine Flüssigtrennstufe 33 anschließt. Die Kondensationsstufe 32 ist über einen Bypass 40 mit dem Zuführungsrohr 24 verbunden.

Die mit der Rutsche 35 verbundene Fördereinrichtung 31 ist seitlich an dem Behälter 21 angeordnet und ist als Rohrförderschnecke ausgebildet, die von dem Schneckenantrieb 41 angetrieben wird. Am oberen Ende der Fördereinrichtung 31 ist eine weitere Rutsche 42 angeflanscht, über die das geförderte Kontaktmittel in den Behälter 21 zurückgelangt. An der Rutsche 42 ist ein Luftgebläse 43 mit entsprechendem Luftauslaß 44 angeordnet.

Das gesättigte Kontaktmittel 30 gelangt in kleinen Mengen, vorzugsweise in den Mengen, die jeweils abgelassen werden, in die Austreibkammer 26, die nach Füllung durch die Absperreinrichtung 29 zum Behälter und zur Rutsche 35 abgeschlossen wird. Das Kontaktmittel wird von der vom Heißluftgebläse gelieferten Heißluft kontinuierlich angeblasen und die zu trennenden Stoffe, z.B. Lösungsmittel, trennen sich von dem Kontaktmittel und gelangen vermischt mit der Heißluft als Lösungsmitteldampf über den Kanal 39 in einen mit einem Rohrregister versehenen Kondensator der Kondensationsstufe 32. Durch starke Unterkühlung des Rohrregisters erfolgt eine Kondensation und die Lösungsmittel trennen sich dabei mit Wasserdampf aus dem Luft- bzw. Gasgemisch und fallen schließlich als Flüssigkeit aus. Die Restgase werden über den Bypaß 40 der Anströmseite des Wanderbettadsorbers wieder zugeleitet. Die in der Kondensationsstufe 32 ausgefallene Flüssigkeit wird in der Flüssigkeitstrennstufe 33, die als Lösungsmittel- und gegebenenfalls Wasserabscheider ausgebildet ist, gesammelt. Bei unterschiedlichen spezifischen Gewichten zwischen Lösungsmittel und Wasser kann eine saübere Trennung vorgenommen werden und entsprechend den Flüssigkeitshöhen über Ablaßstutzen 45 abgezogen werden. Falls die spezifischen Gewichte des Lösungsmittels und des Wassers ähnlich sind, kann eine saubere Trennung zwischen den beiden Medien nicht vorgenommen werden, so daß eine Fraktionier- oder Rektifikationsstufe nachgeschaltet werden muß, wobei die Abmessungen dieser Stufen den jeweils kleinen zu trennenden Flüssigkeitsmengen angepaßt sind. In dem beschriebenen Verfahren wurde Heißluft als Medium zur Austreibung verwendet. Anstelle der Luft kann auch Heißgas, z.B. Inertgas oder Stickstoff vorgesehen sein. Auch eine Austreibung über Kontaktwärme ist möglich.

Nach der Austreibung der flüchtigen Stoffe wird die Absperreinrichtung 29 an der unteren Seite der Austreibkammer 26 geöffnet und das auf 85° bis 180° C aufgeheizte Kontaktmittel gelangt auf die Rutsche 35. Die Kühlschlange kühlt das Kontaktmittel auf ungefähr 20° bis 23° C herunter, das über die Fördereinrichtung 31 nach oben transportiert wird und auf die Rutsche 42 geleitet wird. Durch die vom Gebläse 43 gelieferte trockene Luft wird das Kontaktmittel getrocknet und die durch Abrieb hervorgerufenen Staubreste werden über den Luftauslaß 44 herausgeblasen.

Die bei diesem Ausführungsbeispiel verwendete Rohrförderschnecke der Fördereinrichtung 31 kann auch innen mit einem zum Teil geringfügig perforierten, aufblasbaren, anvulkanisierten Schlauch ausgekleidet sein, der zum Zwecke der Schneckenabdichtung mit einem Druckluftpolster versehen wird. Durch Einblasen von Luft wird eine weitere Trocknung und/oder Kühlung des Kontaktmittels während der Hochförderung erreicht.

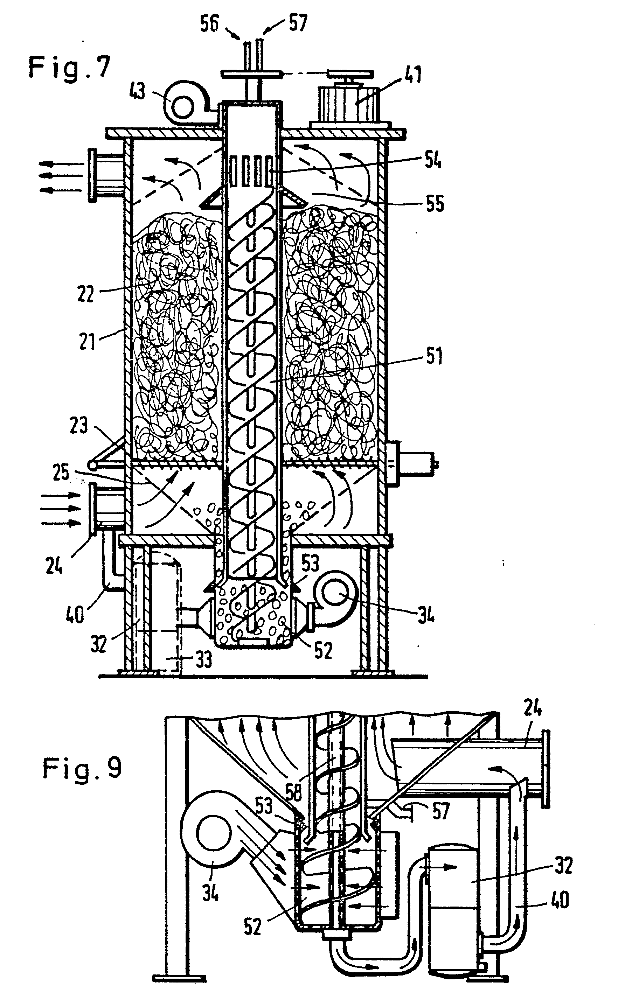

Fig. 6 zeigt eine Aufsicht der Vorrichtung nach Fig. 5, wobei zu erkennen ist, daß der Behälter eine runde oder eine eckige oder auch eine andere Form aufweisen kann. In Fig. 7 ist eine weitere Ausführungsform der erfindungsgemäßen Vorrichtung dargestellt, wobei die Fördereinrichtung 51 in der Mitte des Behälters angeordnet ist. Für gleiche Teile werden die gleichen Bezugsziffern wie in Fig. 5 verwendet. An den Behältertrichter 25, der für den Durchgang des Mediums mit Öffnungen versehen ist, wobei die Öffnungen kleiner sind als das jeweilige Kontaktmittelgranulat, schließt sich eine Kammer 52 an, die nach unten hin fest verschlossen ist. In die Kammer 52, die während des Austreibens zum Behältertrichter 25 über die einseitige Absperreinrichtung 53 gegen den Auslaß des Behältertrichters 25 abgesperrt ist, ragt mittig die als Rohrförderschnecke ausgebildete vom Schnekkenantrieb 41 angetriebene Fördereinrichtung 51 hinein. Am oberen Ende der Fördereinrichtung innerhalb des Behälters 21 sind Auslaßöffnungen 54 zum Auswerfen des gereinigten Kontaktmittels aus dem Rohr der Fördereinrichtung heraus vorgesehen, unter denen ein Haufenabweiser 55 angeordnet ist. In der Fördereinrichtung 51 sind Rohrleitungen zur Kühlung des Kontaktmittels vorgesehen, wobei oberhalb der Fördereinrichtung der Anschluß des Kaltwasservorlaufs 56 und der des Kaltwasserrücklaufs 57 zu sehen ist. Die Funktionsweise entspricht der in Fig. 5 beschriebenen.

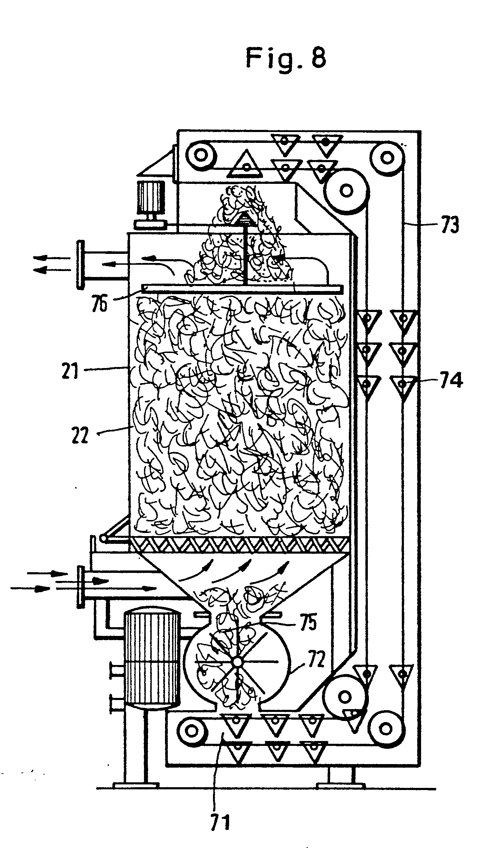

Ein weiteres Ausführungsbeispiel ist in Fig. 8 dargestellt, wobei hier nur die Unterschiede zu den anderen Ausführungsbeispielen beschrieben werden sollen. Unterhalb des Behältertrichters 25 ist eine Zellenradschleuse 72 angeordnet, die verschiedene Segmente 75 aufweist. Nachdem ein Segment das zu reinigende Kontaktmittel 30 aufgenommen hat, dreht sich die Zellenradschleuse 72 weiter und die nicht näher dargestellte Austreibung wird durchgeführt. Die Destillation und Trennung erfolgt in bekannter Weise. Als Fördereinrichtung 71 ist ein Becherwerk vorgesehen, bei dem Becher 74 an Ketten 73 befördert werden. Das gereinigte Kontaktmittel wird von einem Segment in den Becher 74 abgelassen, wobei ein Bürstensystem zur Becherabdichtung an der Aufgabestelle vorgesehen sein kann. Die Becher, die z.B. 1,4 Liter fassen können, werden an den Ketten von der unteren Aufnahmestelle bis nach oben transportiert. An der Abgabestelle laufen die Becher 74 auf und drehen sich zwangsweise um. Das Granulat fällt von oben her auf die Kontaktmittelschicht 22, wobei ein Glattstreicher 76 das Granulat breitflächig mit ebener Oberfläche verteilt und glättet. Selbstverständlich können derartige Glattstreicher auch in den anderen Ausführungsbeispielen vorhanden sein, oder er kann durch eine Sortier- und Verteilereinrichtung mit gleicher Funktion ersetzt werden.

Bei diesem Ausführungsbeispiel kann die Austreibung und Kondensation wie bei den anderen Ausführungsbeispielen erfolgen. Es versteht sich von selbst, daß eine Zellenradschleuse entsprechend der Fig. 8 zum Beispiel elastisch abgedichtet ist. Bei der Verwendung einer derartigen Zellenradschleuse können die verschiedenen Vorgänge segmentweise erfolgen, d.h. die Austreibung, Kühlung oder Trocknung wird segmentweise nacheinander durchgeführt.

Fig. 9 zeigt einen Teilschnitt durch den unteren Teil der Vorrichtung, wobei diese Figur dem Ausführungsbeispiel nach Fig. 7 entspricht. Hier ist die Austreibungskammer 52 als absperrbarer zylinderförmiger Behälter ausgebildet, der einen Anschlußstutzen für das Heißluftgebläse 34 aufweist. Zusätzlich ist dieser zylinderförmige Behälter mit Durchbrechungen versehen, durch die das Austreibungsgas ungehindert hindurchströmen kann. Die schneckengängigen Spiralen liegen im Bereich der Austreibungskammer 52 frei und vergrößern sich in diesem Bereich. Durch diese Maßnahme kann das Kontaktmittel immer einwandfrei nach oben transportiert werden, auch in dem Fall, daß der zylinderförmige Behälter im Querschnitt größer ist als die Rohrförderschnecke. Die Hohlwelle 58 der als Rohrförderschnecke ausgebildeten Fördereinrichtung 51 ist für den Trocken- oder Kühlluftauslaß in das geförderte Kontaktmittel oder zur Abführung von Austreibungsluft, Dampf oder Heißgasen perforiert bzw. ist mit Durchbrechungen versehen, die kleiner als die Kontaktmittelteilchen sind. Die Rohrförderschnecke weist außen ein Hohlrohr auf, in das Kühlmittel, z.B. Kaltwasser, eingelassen werden kann. Der Kaltwasserablauf 57 ist im unteren Ende gezeigt. Das Austreibungsgas wird mit den ausgetriebenen Stoffen am unteren Ende der Austreibkammer 52 der Kondensationsstufe zugeführt.

Für eine kompakte und integrierte Austreibung und Kondensation sind noch weitere, nicht dargestellt Möglichkeiten denkbar. So kann z.B. die in Fig. 5 gezeigte Rutsche 35 gleichzeitig als Austreibkammer dienen, wobei dann allerdings die Kühlschlange 38 entfernt ist. Eine andere Möglichkeit besteht darin, daß das abgelassene Kontaktmittel über eine Rutsche direkt in den unteren Bereich einer als Rohrförderschnecke ausgebildeten Fördereinrichtung gelangt, wobei dieser untere Bereich gleichzeitig als Austreibungskammer dient. Auch können andere Fördereinrichtungen vorgesehen sein, so z.B. flexible Rohrförderschnecken oder starre oder flexible Rohrtransportvorrichtungen, bei denen das Kontaktmittel mittels Luft nach oben förderbar ist.

Das beschriebene Wanderbettsystem mit der integrierten, absperrbaren, minimierten Austreibungskammer ist sowohl als Trockner oder Adsorber für trockene Medien oder auch für flüssige Medien nutzbar. Die Austreibung bzw. die Spülung erfolgt entweder über Kontaktwärme, Heißgas, Heißdampf oder Flüssigkeit, sofern es sich um die Reinigung oder Aufbereitung von Flüssigkeiten im Wanderbett handelt.

**Patentansprüche**

1. Verfahren zum kontinuierlichen Austausch von in einem chemischen und/oder physikalischen Abscheidevorgang verbrauchten regenerierbaren Kontaktmitteln, wie Trockenmitteln, Adsorbermaterialien oder Katalysatoren aus rieselfähigen, horizontal angeordneten Feststoffbetten, die mit dem den zu trennenden Stoff enthaltenden gas- oder dampfförmigen Medium von unten nach oben angeströmt werden, wobei sich die Kontaktmittel von der Anströmseite weg abnehmend mit dem zu trennenden Stoff anreichern und wobei parallel zu dem ständig durchgeführten chemischen und/oder physikalischen Vorgang ohne Betriebsunterbrechung die gesättigten Kontaktmittel in einem Regenerator von den zu trennenden Stoffen im geschlossenen Kreislauf gereinigt werden und nach dem Regenerationsvorgang dem Feststoffbett entsprechend der jeweiligen Ablaßmenge zugeführt werden, dadurch gekennzeichnet, daß von den Kontaktmitteln des Feststoffbettes die gesättigten Kontaktmittel in kleinen gleichmäßigen Mengen schichtweise in Intervallen als über den gesamten Querschnitt des Feststoffbettes gleichmäßige planparallele Schichten abgeführt werden und daß die jeweilig abgelassene Menge an Kontaktmittel direkt dem dieser Menge angepaßten, und während der Regeneration gegenüber dem Feststoffbette abgesperrten Regenerator zugeführt wird.

2. Verfahren nach Anspruch 1, dadurch gekennzeichnet, daß bei einem aus mehreren übereinander oder hintereinander angeordneten Scheiben aus den Kontaktmitteln bestehenden Feststoffbett eine durch den chemischen und/oder physikalischen Vorgang gesättigte Scheibe zum Regenerator befördert wird, während parallel dazu der Vorgang mit den übrigen Scheiben weiterhin durchgeführt wird, daß die zu trennenden Stoffe im Regenerator aus der jeweiligen Scheibe gelöst werden und daß die Scheibe nach der Regenerierung zum Feststoffbett auf die der Anströmseite entgegenliegende Seite zurückbefördert wird.

3. Verfahren nach Anspruch 1 oder 2, dadurch gekennzeichnet, daß der zu trennende Stoff mit Kontaktwärme oder Heißgas aus den Kontaktmitteln ausgetrieben wird und daß anschließend die mit dem zu trennenden Stoff vermischten heißen Gase einer Kondensation unterzogen und einer Flüssigkeitstrennstufe oder Rektifizierung zugeleitet werden.

4. Verfahren nach Anspruch 3, dadurch gekennzeichnet, daß das aus der Austreibungsund Kondensationsstufe ausgetriebene und destillierte Gemisch aus Wasser und dem zu trennenden Stoff einer Fraktionieroder Rektifikationsstufe kleiner Abmessungen zugeführt wird, in der kleine Flüssigkeitsmengen chemisch rein phasengetrennt werden.

5. Verfahren nach Anspruch 3, dadurch gekennzeichnet, daß nach der Kondensation die Restgase der Anströmseite des Feststoffbettes als Bypaß wieder zurückgegeben werden.

6. Verfahren nach einem der Ansprüche 3 bis 5, dadurch gekennzeichnet, daß zur Austreibung Kontaktwärme, Heißgas, Inertgas, Stickstoff oder aufgeheizte atmosphärische Luft verwendet wird.

7. Verfahren nach einem der Ansprüche 1, 3 bis 6, dadurch gekennzeichnet, daß die Kontaktmittel bei der Förderung nach oben oder direkt nach der Förderung nach oben mit der Abwärme aus der Kondensation, Trockenzone oder der Austreibungszone unter Zuhilfenahme von Luft getrocknet und von Staubresten befreit wird.

8. Vorrichtung zur Durchführung des Verfahrens nach einem der Ansprüche 1 bis 7 mit einem Wanderbettadsorber, in dessen Behälter die von unten nach oben durchströmte Schicht des Kontaktmittels aufgenommen ist, wobei über eine Ablaßvorrichtung das gesättigte Kontaktmittel in kleinen Mengen nach unten in einen Behältertrichter ablaßbar ist, mit einem Regenerator und mit einer Fördervorrichtung zum Transport des Kontaktmittels nach oben, dadurch gekennzeichnet, daß die Ablaßvorrichtung derart ausgebildet ist, daß das Kontaktmittel in über den gesamten Querschnitt des Wanderbettadsorbers sich erstreckenden dünnen planparallelen Schichten in Intervallen abgeführt wird, daß unterhalb des Behältertrichters (25) sich die Austreibungskammer (26, 52) des absperrbaren Regenerators (27) anschließt, der in seiner Größe an die kleinen Mengen des jeweils abgeführten Kontaktmittels (30) angepaßt ist.

9. Vorrichtung nach Anspruch 8, dadurch gekennzeichnet, daß die Austreibungskammer (26, 52) mit einem Heißgasgebläse verbunden ist und durch die Absperrvorrichtung (29, 53) abgeschlossen ist.

10. Vorrichtung nach Anspruch 8 oder 9, dadurch gekennzeichnet, daß der Austreibungskammer (26, 52) eine Kühlzone zur Abkühlung des Kontaktmittels und/oder Kondensation nachgeschaltet ist.

11. Vorrichtung nach Anspruch 10, dadurch gekennzeichnet, daß die Kühlzone als in dem Bereich zwischen Austreibungskammer (26) und Fördereinrichtung (31) angeordnete mit Kühlmittel gefüllte Kühlschlange (38) ausgebildet ist.

12. Vorrichtung nach einem der Ansprüche 8 bis 11, dadurch gekennzeichnet, daß die

Fördereinrichtung als starre oder flexible Förderschnecke oder Luftschubeinheit ausgebildet ist.

13. Vorrichtung nach einem der Ansprüche 8 bis 12, dadurch gekennzeichnet, daß die Fördereinrichtung eine Hohlwelle und/oder ein Hohlrohr aufweist, die das Kühlmittel zur Kühlung und/oder zur Trocknung des Kontaktmittels bei der Hochförderung aufnimmt.

14. Vorrichtung nach Anspruch 12 oder 13, dadurch gekennzeichnet, daß die Hohlwelle und/oder das Hohlrohr der Förderschnecke mit Durchbrechungen versehen sind, die kleiner als die Kontaktmittelteilchen sind.

15. Vorrichtung nach Anspruch 13 oder 14, dadurch gekennzeichnet, daß der untere Bereich der Förderschnecke als Austreibungskammer ausgebildet ist und außen einen Stutzen zur Zuführung des Austreibungsgases aufweist.

16. Vorrichtung nach Anspruch 13, dadurch gekennzeichnet, daß die Luftschubeinheit ein in einem Rohr angeordnetes einfach gelochtes Mittelrohr aufweist, in dem das Kontaktmittel ohne Drehung gerade gerichtet durch Druck- und Preßluft nach oben transportiert ist.

17. Vorrichtung nach einem der Ansprüche 8, 11, 13 und 16, dadurch gekennzeichnet, daß unterhalb des Behältertrichters eine abgedichtete Zellenradschleuse angeordnet ist, wobei mindestens ein Segment das jeweils abgelassene Kontaktmittel übernimmt und die Austreibung und Kühlung, Trocknung oder Kondensation segmentweise nacheinander erfolgt.

**Claims**

1. Process for the continuous replacement of regeneratable contact agents consumed in a chemical and/or physical separation process, such as drying agents, adsorbing materials or catalysts from free-flowing, horizontally arranged solid beds, against which flows from bottom to top with the gaseous or vaporous medium containing the substance to be separated, whereby from the incident flow side the contact agents are decreasingly enriched with the substance to be separated and whereby in parallel to the continuously performed chemical and/or physical process and without any interruption to the operation, the saturated contact agents are purified from the substances to be separated in closed circuit in a regenerator and following the regeneration process are supplied to the solid bed in accordance with the particular discharge quantity, characterized in with respect the contact agents of the contact bed, the saturated contact agents are removed in layers and at intervals in the form of small uniform quantities as uniform plane-parallel layers uniformly distributed over the entire cross-section of the solid bed and that the in each case removed contact agent quantity is directly supplied to the regenerator blocked with respect to the solid bed during regeneration and which adapted to this quantity.

2. Process according to claim 1, characterized in that in the case of a solid bed consisting of several superimposed or successively arranged disks of the contact agents, a disk saturated by the chemical and/or physical process is fed to the regenerator and parallel thereto the process is continued with the remaining disks, so that the substances to be separated are dissolved from the particular disk in the regenerator and that, following regeneration, the disk is fed back to the solid bed on the side opposite to the incident flow side.

3. Process according to claims 1 or 2, characterized in that the substance to be separated is expelled or stripped from the contact agent with contact heat or hot gas and that subsequently the hot gases mixed with the substance to be separated undergo condensation and are fed to a liquid separation stage or rectification stage.

4. Process according to claim 3, characterized in that the distilled mixture of water and the substance to be separated expelled from the expulsion and condensation stage is supplied to a fractional distillation or rectification stage of small size, in which small liquid quantities are chemically purely phase-separated.

5. Process according to claim 3, characterized in that following condensation, the residual gases are returned as a bypass to the incident flow side of the solid bed.

6. Process according to one of the claims 3 to 5, characterized in that use is made of contact heat, hot gas, inert gas, nitrogen or heated atmospheric air for expulsion or stripping.

7. Process according to one of the claims 1, 3 to 6, characterized in that during feeding upwards or directly after feeding upwards, the contact agent is dried with the waste heat from the condensation, drying zone or expulsion zone with the aid of air and dust residues are removed therefrom.

8. Apparatus for performing the process according to one of the claims 1 to 7, with a moving bed adsorber, whose container receives the contact agent layer through which there is a flow from bottom to top, the saturated contact agent being dischargeable downwards in small quantities into a container funnel by means of a discharge device, with a regenerator and with a conveyor for conveying the contact agent upwards, characterized in that the discharge device is constructed in such a way that the contact agent is discharged or removed in intervals in thin, plane-parallel layers extending over the entire cross-section of the moving bed adsorber and the expulsion chamber (26, 52) of the blockable regenerator (27) is connected below the container funnel (25), the size of the regenerator being adapted to the small quantities of the contact agent (30) removed.

9. Apparatus according to claim 8, characterized in that the expulsion chamber (26, 52) is connected to a hot gas blower and is terminated by a cut-off device (29, 53).

10. Apparatus according to claims 8 or 9, characterized in that the expulsion chamber (26, 52) is followed by a cooling zone for cooling the contact agent and/or condensation.

11. Apparatus according to claim 10, characterized in that the cooling zone is constructed as a cooling coil (38), which is filled with a coolant and is arranged in the area between the expulsion chamber (26) and conveyor (31).

12. Apparatus according to one of the claims 8 to 11, characterized in that the conveyor is constructed as a rigid or flexible feed screw or air thrust unit.

13. Apparatus according to one of the claims 8 to 12, characterized in that the conveyor has a hollow shaft and/or hollow tube, which receives the coolant for cooling and/or drying the contact agent during its upward movement.

14. Apparatus according to claim 12 or 13, characterized in that the hollow shaft and or hollow tube of the feed screw is provided with openings, which are smaller than the contact agent particles.

15. Apparatus according to claims 13 or 14, characterized in that the lower region of the feed screw is constructed as an expulsion chamber and is externally provided with a connecting piece for supplying the expulsion gas.

16. Apparatus according to claim 12, characterized in that the air thrust unit has a singly perforated central tube arranged in a pipe in which the contact agent is conveyed upwards without twisting and directed straight by compressed and pressure air.

17. Apparatus according to one of the claims 8, 11, 13 and 16, characterized in that below the container funnel is provided a sealed bucket wheel lock, at least one segment taking over the discharged contact agent, the expulsion and cooling, drying or condensation taking place segmentally and successively.

**Revendications**

1. Procédé pour assurer le remplacement continu d'agents de contact régénérables utilisés dans un processus de séparation chimique et/ou physique, dans lequel on met en oeuvre les agents de contact précités sous forme de matières solides, telles que des matières déshydratantes, adsorbantes ou catalysantes, constituant un lit meuble horizontal, à travers lequel on fait passer, par soufflage de bas en haut, le fluide, à l'état de gaz ou de vapeur, contenant la substance à recueillir par séparation, de manière à enrichir les agents de contact avec la substance précitée suivant un taux d'enrichissement qui va en décroissant à partir du côté où le fluide gazeux pénètre dans le lit de traitement, en assurant un mouvement en circuit fermé des agents de contact, parallèllement au processus de séparation chimique et/ou physique réalisé en continu et sans interruption, afin d'épurer ensuite les agents de contact saturés en les faisant passer dans un régénérateur, pour les débarrasser de la substance à récupérer par séparation, et pour les ramener dans le lit de traitement après cette épuration, à un débit instantané qui correspond au débit de sortie du lit considéré; procédé caractérisé en ce qu'on prélève les agents de contact saturés dans le lit de matières solides en opérant périodiquement et par couches, pour prélever les matières par quantités égales et de faible importance, ce prélèvement de matières s'effectuant par couches planes parallèles et d'ègale èpaisseur, sur toute l'étendue du lit de matières solides; et en ce qu'on introduit directement, à chaque fois, dans le régénérateur la quantité d'agents de contact ainsi prélevée dans le lit de traitement, le régénérateur étant adapté à recevoir la quantité en question, et ne communiquant pas avec le lit de matières solides pendant la régénération.

2. Procédé selon la revendication 1, caractérisé en ce qu'on opère avec un lit de matières solides constitué par plusieurs disques d'agents de contact superposés ou disposés l'un derrière l'autre, pour introduire dans le régénérateur un disque saturé sous l'effet du processus chimique et/ou physique, cependant qu'on poursuit parallèlement ce même traitement au moyen des disques restants; en ce qu'on débarrasse le disque saturé des substances à récupérer, dans le régénérateur; et en ce qu'on ramène au lit de matières solides le disque ainsi régénéré, du côté du lit opposé au côté par où arrive le fluide de traitement.

3. Procédé selon l'une des revendications 1 ou 2, caractérisé en ce qu'on extrait des agents de contact les substances à récupérer, en faisant agir une chaleur de contact ou un courant de gaz chaud, et en ce qu'on soumet ensuite à un effet de condensation les gaz chauds chargés des substances à récupérer, et en ce qu'on les fait passer alors dans un étage de séparation de liquide ou de rectification.

4. Procédé selon la revendication 3, caractérisé en ce qu'on fait passer dans un étage de fractionnement ou de rectification de petites dimensions le mélange distillé d'eau et de substance à récupérer provenant de l'étage d'extraction et de condensation, pour obtenir par séparation de phases de petites quantités de liquides chimiquement purs.

5. Procédé selon la revendication 3, caractérisé en ce que, après la condensation, on ramène par dérivation le courant gazeux résiduel au lit de matières solides, du côté où pénètre le fluide du traitement.

6. Procédé selon l'une des revendications 3 à 5, caractérisé en ce qu'on effectue l'extraction au moyen de la chaleur de contact, d'un gaz chaud, d'un gaz inerte, d'azote, ou d'air atmosphérique

9

chauffé.

7. Procédé selon l'une des revendications 1, 3 à 6, caractérisé en ce qu'on effectue un séchage et un dépoussiérage final des agents de contact, au moyen d'un courant d'air, au cours de leur mouvement vers le haut ou immédiatement après ce mouvement, en utilisant la chaleur qui provient de la condensation, de la zone de séchage, ou de la zone d'extraction.

8. Procédé pour la mise en oeuvre du procédé selon l'une des revendications 1 à 7, comportant un récipient qui contient un lit fluidisé d'adsorption constitué par une couche d'agents de contact, dans lequel on fait passer de bas en haut un courant du fluide de traitement, un système d'extraction pour évacuer vers le bas et par petites quantités les agents de contact saturés, pour les amener dans une trémie associée au récipient précité, un régénérateur, et un système de transport pour déplacer les agents de contact vers le haut; dispositif caractérisé en ce que le système d'extraction est réalisé de manière à assurer le prélèvement des agents de contact par intervalles périodiques et suivant des couches planes, parallèles et minces, couvrant toute l'étendue du lit fluidisé d'adsorption; et en ce que la chambre d'extraction (26, 52) du régénérateur (27) pourvue de moyens d'isolement est raccordée à la trémie de sortie (25) du récipient, en-dessous de cette trémie, la grandeur du régénérateur (27) étant adaptée à recevoir la petite quantité d'agents de contact (30) qui est évacuée à chaque fois du lit de traitement.

9. Dispositif selon la revendication 8, caractérisé en ce que la chambre d'extraction (26, 52) est raccordée à un ventilateur qui refoule un courant de gaz chaud, et obturée par le dispositif d'arrêt (29, 53).

10. Dispositif selon l'une des revendications 8 ou 9, caractérisé en ce qu'en aval de la chambre d'extraction (26, 52) est disposée une zone de refroidissement, pour refroidir les agents de contact et/ou assurer un effet de condensation.

11. Dispositif selon la revendication 10, caractérisé en ce que la zone de refroidissement est constituée par un serpentin (38) rempli d'un fluide de refroidissement, et disposé entre la chambre d'extraction (26) et le système de transport (31).

12. Dispositif selon l'une des revendications 8 à 11, caractérisé en ce que le système de transport est constitué par un appareil transporteur hélicoïdal souple ou rigide, ou par un élévateur à effet pneumatique.

13. Dispositif selon l'une des revendications 8 à 12, caractérisé en ce que le système de transport comporte une colonne creuse et/ou un corps tubulaire, dans lequel peut passer le fluide de refroidissement servant à refroidir et/ou à sécher les agents de contact au cours de leur déplacement vers le haut.

14. Dispositif selon l'une des revendications 12 ou 13, caractérisé en ce que la colonne creuse et/ou le corps tubulaire de l'appareil transporteur hélicoïdal présentent des perforations dont le calibre est inférieur à celui des particules des agents de contact.

15. Dispositif selon l'une des revendications 13 ou 14, caractérisé en ce que la partie inférieure de l'appareil transporteur hélicoïdal constitue une chambre d'extraction, pourvue extérieurement d'un embout de raccordement pour l'arrivée du gaz d'extraction.

16. Dispositif selon la revendication 12, caractérisé en ce que l'appareil élévateur à effet pneumatique comporte un corps tubulaire, dans lequel est disposé un tube simplement perforé, pour assurer le déplacement vers le haut des agents de contact sans effet de rotation, grâce à un courant d'air comprime.

17. Dispositif selon l'une des revendications 8, 11, 13 et 16, caractérisé en ce qu'il comporte un sas à roue cellulaire, monté de manière étanche sous la trémie de sortie du récipient contenant le lit de matières de traitement, pour que chaque tranche d'agents de contact provenant du lit de traitement soit reçue à tour de rôle dans au moins un compartiment de la roue cellulaire, en vue des opérations successives d'extraction et de refroidissement, de séchage ou de condensation.

## Fig.1

## Fig.2

## Fig.3

## Fig.4

1

Fig.5

Fig.6

Fig.7

Fig.9

# Fig. 8